# EUROPEAN PATENT SPECIFICATION

(11) **EP 2 620 252 B1**
(45) Date of publication and mention of the grant of the patent: **17.09.2014**
(21) Application number: 12425019.2
(22) Date of filing: 30.01.2012
(51) Int. Cl.: B23Q 1/26, B23Q 16/10

(54) **Turntable for supporting parts and/or tool holder units for machine tools**
Drehtisch zur Stützung von Teilen und/oder Werkzeughaltereinheiten für Maschinenwerkzeugen
Plateau tournant pour supporter des pièces et/ou des unités porte-outils pour machines-outils

(43) Date of publication of application: 31.07.2013
(73) Proprietor: HURCO COMPANIES INC., Indianapolis, IN 46268 (US)
(72) Inventor: De Bernadi, Franco, 21052 Busto Arsizio (VA) (IT)
(74) Representative: Bittner, Thomas L.

(56) References cited:
- EP-A1- 0 899 057
- WO-A1-02/090045

## Description

The present invention relates to a turntable for supporting workpieces to be processed or tool holders, either fixed or rotating, said turntable being rotatable about an axis of a machine tool as well as lockable in predetermined positions angularly spaced from each other about said axis.

It is a multifunctional mechanism wherein means are provided which rotatably constrain the turntable to the stationary part for allowing the turntable rotation even at high speed with the utmost accuracy without oscillations about the axis of rotation. With the rotational constraint of the turntable to the stationary part, the operation is that for processes with rotatable tools with interpolation movements or for any angular positioning, in cooperation with a parking brake. Said constraining means, on the other hand, must be disconnected when the turntable is coupled with the stationary part and locked thereto with other means in a totally stiff fashion according to predetermined angular positions. In these latter conditions, the operation is that for the stiff support of parts in stationary conditions for heavy and high precision processes or when the turntable is used for supporting fixed tool holders for turning operations, for ensuring the necessary stiffness and accuracy to the same.

From the above description it is clear that the different means, rotational and/or stiff fixed, for locking the rotating parts to the fixed parts are alternating and each one, when unlocked, must allow a clearance relative to the fixed parts for allowing the correct locking of the other one.

If there were no clearance between the means that rotatably constrain the turntable to the fixed part upon the turntable locking, undesired reactions would occur between the parts that may hinder the locking, generate positioning accuracies and thereby cause breakage.

On the other hand, when the turntable is placed in rotating setup, said clearance must be eliminated to allow the turntable to rotate also at high speed with the utmost accuracy without oscillations about the rotation axis, whereas the unlocking of the fixed part generates a clearance between the stiff locking means between rotating part and fixed part.

The invention therefore relates to a turntable for supporting parts and/or tool holders for tools adapted to carry out turning operations, and/or for tools adapted to carry out drilling and/or milling operations, comprising a supporting column rotatable about a predetermined axis "B-B", a stationary base body adapted to be fixed to the machine tool, containing said rotatable column, motor means for setting said rotatable column supporting the turntable in rotation about said predetermined axis, first connecting means integral with said stationary body and second connecting means integral with said rotatable column, a connecting member movable between a first position, wherein it is engaged with said first and second connecting means at the same time, making them integral with each other and a second position wherein it is apart from said connecting means, said first and second position of the connecting member being actuable in corresponding stationary operating positions of the turntable angularly spaced from each other, at least one radial centring and axial supporting bearing arranged between said rotatable column and said stationary body, as well as a member adapted to eliminate the clearance existing between said rotatable column and said stationary body.

Turntables with members for eliminating the clearance between the stationary body and rotatable column during the turntable operation with rotatable drilling or milling tools are known. One example is shown in EP-A-1383629 where an annular piston concentric to the rotatable column and seated within a cavity of the stationary body, acting as cylinder, is set up for being axially pushed against an opposite plane of the rotatable column with the interposition of an axial thrust bearing.

According to the known technique mentioned above, the clearance is eliminated through the bearing roller cage but in axial direction only, whereas in radial direction there is no clearance recovery or elimination for radial roller cages which can therefore be strongly stressed during the use of the turntable in rotatable setup, with consequent risks of seizing and breakage, so it is necessary to leave an even small adjustment clearance which leads to radial inaccuracies that affect the processing of parts, with errors of often unacceptable extent, besides the possibility of vibrations during the process.

Document EP 0 899 057 A1 discloses an indexing mechanism for machine tools, in which the time required for indexing can be reduced as compared with the 2-piece type, an in which any deterioration of the indexing precision can be avoided by preventing the couplings from wearing. A tool post indexing mechanism for composite-process lathe, in which a tool post body with a tool affixed thereto is rotation-indexably and clampably mounted on a support plate (base), comprises a connecting coupling provided advanceably and retreatably so as to be engaged with both a rotational-side coupling fixed to a rotating table with the tool post body mounted thereon, and a stationary-side coupling fixed to an anchor block on the support plate side, and a spring (gap forming means) which causes a gap to be generated between the rotational-side coupling and the support plate by an operation of the connecting coupling in such a direction that the engagement is released.

The object of the present invention therefore is to devise a device for eliminating the clearance in both axial direction and in radial direction between the rotatable column and the stationary body of a multifunctional table for machine tools, which may eliminate the drawbacks found in the prior art devices.

The object is achieved with the device according to the following claim 1.

The invention shall now be described in more detail with reference to an embodiment thereof, made by way of a non-limiting example with the aid of the attached drawings, wherein:
- figure 1 schematically shows a cross section of the tool holder turntable incorporating the device according to the invention wherein, on the left side, it is shown when it is in the position of rotating setup about the stationary body, whereas in the left side it is shown in the position wherein it is locked relative to the stationary body;
- figure 1A shows an enlarged scale of a detail of figure 1 in the position wherein the turntable is in rotatable setup;
- figure 1B shows an enlarged scale of a detail of figure 1 in the position wherein the turntable is locked in a predetermined angular position;

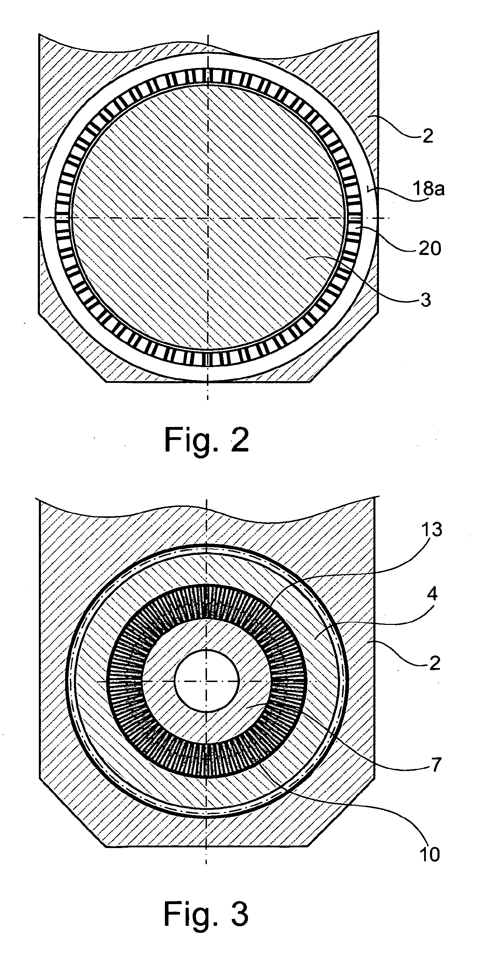

- figure 2 schematically shows the section taken along line II-II of figure 1;
- figure 3 schematically shows the section taken along line III-III of figure 1.

With reference to said figures, reference numeral 1 indicates the base of a stationary body 2 for supporting a table 3, mounted in a rotatable column 4, for supporting workpieces to be processed or conventional tool holders, not shown. Such tool holders are intended for supporting tools for turning processes, or tools for drilling and/or milling processes.

Table 3 with column 4 thereof is rotatable about a predetermined rotation axis "B-B".

The rotatable supporting column 4 is inserted within the stationary body 2 and the end part 5 thereof engages with a conventional sheet braking device, indicated with reference numeral 6, which is used when table 3 needs to be stopped when the latter is in the rotating setup, in any non predetermined position.

Column 4 is to be understood as connected with an electrical driving motor, not shown, through a conventional kinematic coupling, not shown either, for the rotation thereof or for the angular movements thereof between one fixed position and a subsequent one.

Base 1 is integral with an axial section 7, concentric to column 4, in the annular cavity 8 whereof a body 9 is seated frontally provided with a toothing 10 of the "Hirth" type which faces a first rim 11, with "Hirth toothing, carried by an annular body 12 integral with the rotatable column 4, and a second rim 13, also with "Hirth toothing, carried by the annular body 14 integral with base 1.

The toothed rims 11 and 13 constitute respective first and second connecting means whereas body 9 represents an axial connecting member for locking and unlocking table 3 in a predetermined angular position about axis B-B.

The annular body 9 acts within the annular cavity 8 as a piston within the respective cylinder thanks to the gaskets schematised in 15 and 16 and to the feeding of a hydraulic fluid, for example oil, through conventional connections, not shown.

The annular body 9 moves toothing 10 from a first position, wherein it is in concurrent engagement with the concentric toothed rims 11 and 13 to a second position, wherein it is apart from such toothing, constituting a per se known mechanism for locking and unlocking table 3 in a predetermined angular position about axis B-B.

According to the invention, the rotatable column 4 integral with table 3, is provided with an annular recess 17 wherein an axial-radial roller bearing is mounted, the ring whereof, indicated with reference numeral 18, is provided with a plurality of rollers 19 for the radial centring and with a pair of plurality of rollers 20 and 21 for the axial support.

Ring 18 of the axial-radial bearing radially extends with a portion 18a thereof within an annular recess 22 obtained in body 2 and is provided with a first toothed rim 23 facing towards a second toothed rim 24 carried by the radial wall 25 for axially delimiting or acting as a shoulder of the same annular recess 22, and integral with body 2.

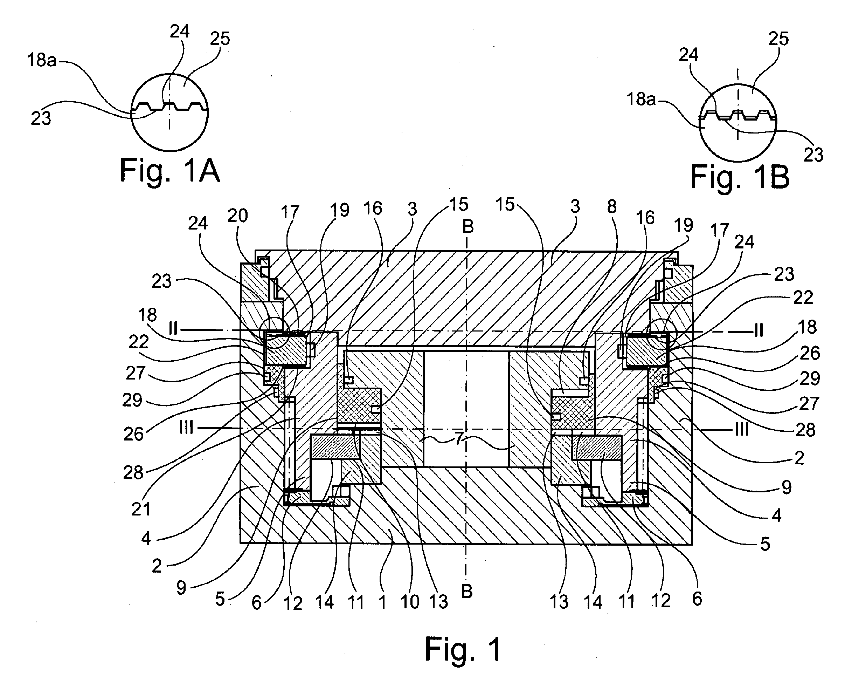

Toothed rims 23 and 24 are in constant loose engagement with each other, as can be seen in figure 1B, so as to allow the existence of a predetermined clearance between the rotatable column 4 and the stationary body 2 required when table 3 must take on a fixed setup through the intervention of the locking member 9.

On the opposite side of toothed rim 23, in axial direction, portion 18a of ring 18 of the axial-radial bearing is in engagement with an annular body 26 seated within an annular recess 27 also obtained within the stationary body 2.

The annular body 26 acts as a piston within the annular recess 27 thanks to the seals 28 and 29 and to the feeding of a hydraulic fluid through conventional connections, not shown. Pressing onto the radial portion 18a of ring 18 of the axial-radial bearing when the pressurised fluid is fed to recess 27 that acts as a cylinder, body 26 determines the complete reciprocal insertion of toothing 23 and 24 with elimination of the pre-existing clearance, as shown in figure 1A. The intervention of the annular body 26 and thereby the elimination of the clearance between the stationary body 2 and the rotatable column 4 is carried out when table 3 is placed in the rotating setup to use drilling and/or milling tools.

From the above description it is clear that, according to the invention, the elimination or recovery of the clearance is carried out without affecting the internal members of the axial-radial bearing, the accuracy whereof is never impaired as it is mounted on the rotatable column 4 and the movement for clearance recovery only affects ring 18 thereof towards the stationary body 2 through the coupling of the toothed rims 23 and 24.

While toothed rims have been discussed, it is clear that as an alternative and for the purposes of the invention, they may also consist of just portions of toothed rim opposite to each other.

Preferably, the toothed rims 23 and 24 consist of teeth with "Hirth" profile.

## Claims

1. Turntable (3) for supporting workpieces to be processed or tool holders for tools adapted to carry out turning operations, and/or for tools adapted to carry out drilling and/or milling operations, comprising a supporting column (4) rotatable about a predetermined axis, in particular axis "B" of a machine tool, a stationary base body (2, 7) adapted to be fixed to the machine tool, arranged coaxially to said rotatable column (4), motor means for setting said rotatable supporting column of the turntable in rotation about said predetermined axis (B-B), first connecting means (11) integral with said stationary base body (7) and second connecting means (13) integral with said rotatable column (4), a connecting member (9) with toothing (10), movable between a first position, wherein it is engaged with said first and second connecting means at the same time, making them integral with each other and a second position wherein it is apart from said connecting means, said first and said second position of the connecting member (9) being actuable in corresponding stationary operating positions of the table (3) angularly spaced from each other, at least one radial centring and axial supporting bearing (19, 20, 21) arranged between said rotatable column (4) and said stationary body (2), as well as a member adapted to eliminate the clearance existing between said rotatable column (4) and said stationary body (2),
**characterised in that**
said supporting bearing comprises a ring (18), carrying axial support (20, 21) and radial centring (19) rollers, mounted on the rotatable column (4) supporting the table (3), said ring (18) being provided with at least one portion (18a) which extends radially within an annular recess (22) obtained within the stationary base body (2), wherein the recess (27) is axially movable, said portion (18a) being provided with at least a first axial toothing portion (23), concentric to said axis (B-B) whereabout said rotatable column (4) is rotatable, the teeth of said toothing portion (23) being protruding parallel to said axis (B-B), and being in constant partial axial engagement with the teeth of a second facing and opposite toothing (24) integral with a radial wall (25) delimiting said recess (22) when the table is in the locked setup and being in total axial engagement when the table (3) is in the rotating setup, motor means (26) being provided for axially moving the ring (18) of said bearing within said recess (22) of the stationary body (2).

2. Device according to claim 1, **characterised in that** said portion (18a) of the bearing ring (18) which extends radially relative to the rotatable supporting column (4) comprises an annular portion extending on the entire periphery of the bearing ring (18).

3. Device according to claims 1 and 2, **characterised in that** said toothing portions (23, 24) consist of Hirth toothing.

4. Device according to claims 1 to 3, **characterised in that** said toothing portions (23, 24) consist of annular rims of Hirth toothing.

5. Device according to claim 4, **characterised in that** said Hirth toothing rims are carried on said annular portion (18a) of the ring (18) of said supporting bearing respectively on an axial shoulder of the radial wall (25) integral with said stationary body (2) delimiting the radial recess (22) for seating said radial portion (18a) of the bearing ring (18).

6. Device according to any one of claims 1 to 5, **characterised in that** said motor means acting on said bearing comprise a hydraulic piston (26) positioned within an axial extension (27) of said radial recess (22) for seating the bearing ring within the stationary body (2).

7. Device according to any one of claims 1 to 6, **characterised in that** said first connecting means (11) integral with said stationary body (2) and said second connecting means (10) integral with said rotatable column (4) consist of Hirth toothing rims.

8. Device according to any one of claims 1 to 7, **characterised in that** said connecting member (9) movable between a first position wherein it is in concurrent engagement with said first (10) and said second (11) connecting means, making them integral with each other and a second position wherein it is apart from said connecting means, comprises a Hirth toothing rim.

## Patentansprüche

1. Drehtisch (3) zum Unterstützen von Werkstücken, die verarbeitet werden sollen, oder für Werkzeughalter für Werkzeuge, die dafür angepasst sind, Drehvorgänge durchzuführen, und/oder für Werkzeuge, die dafür angepasst sind, Bohrvorgänge und/oder Fräsvorgänge durchzuführen, umfassend eine Unterstützungssäule (4), die um eine vorher bestimmte Achse drehbar ist, insbesondere um Achse "B" eines Maschinenwerkzeugs, einen stationären Grundkörper (2, 7), der dafür angepasst ist, an dem Maschinenwerkzeug befestigt zu werden, koaxial an der drehbaren Säule (4) angeordnet, Motormittel, um die drehbare Unterstützungssäule des Drehtisches um die vorher bestimmte Achse (B-B) zu drehen, erste Verbindungsmittel (11), die mit dem stationären Grundkörper (7) integral sind, und zweite Verbindungsmittel (13), die mit der drehbaren Säule (4) integral sind, ein Verbindungselement (9) mit Verzahnung (10), bewegbar zwischen einer ersten Position, in der es mit dem ersten und zweiten Verbindungsmittel gleichzeitig in Eingriff ist, wodurch sie zueinander integral werden, und einer zweiten Position, in der es von dem Verbindungsmittel in einem Abstand angeordnet ist, wobei die erste und zweite Position des Verbindungselementes (9) in entsprechenden stationären Bedienungspositionen des Tisches (3) betätigbar ist, die in einem Winkel voneinander angeordnet sind, wobei wenigstens eine radial zentrierende und axial unterstützende Auflage (19, 20, 21) zwischen der drehbaren Säule (4) und dem stationären Körper (2) angeordnet ist, sowie ein Element, das angepasst ist, um den Freiraum, der zwischen der drehbaren Säule (4) und dem stationären Körper (2) besteht, zu eliminieren,
**dadurch gekennzeichnet, dass**
die unterstützende Auflage einen Ring (18) umfasst, der eine axiale Unterstützung (20, 21) und radial zentrierende (19) Rollen trägt, befestigt auf der drehbaren Säule (4), die den Tisch (3) unterstützt, wobei der Ring (18) mit wenigstens einem Abschnitt (18a) zur Verfügung gestellt ist, der sich radial innerhalb einer kreisförmigen Vertiefung (22) erstreckt, die innerhalb dem stationären Grundkörper (2) zur Verfügung gestellt ist, wobei die Vertiefung (27) axial bewegbar ist, wobei der Abschnitt (18a) mit wenigstens einem axialen Verzahnungsabschnitt (23) zur Verfügung gestellt ist, der konzentrisch zur Achse (B-B) ist, um welche die drehbare Säule (4) drehbar ist, wobei die Zähne des Verzahnungsabschnittes (23) parallel zur Achse (B-B) hervorstehen, und in konstantem partialen axialem Eingriff mit den Zähnen einer zweiten Oberfläche und gegenüberliegenden Verzahnung (24) sind, die integral mit der radialen Wand (25) sind, welche die Vertiefung (22) abgrenzt, wenn sich der Tisch in verriegeltem Aufbau befindet und in vollständigem axialem Eingriff sind, wenn sich der Tisch (3) in drehendem Aufbau befindet, wobei Motormittel (26) zur Verfügung gestellt sind, um den Ring (18) der Auflage innerhalb der Vertiefung (22) des stationären Körpers (2) zu bewegen.

2. Vorrichtung nach Anspruch 1, **dadurch gekennzeichnet, dass** der Abschnitt (18a) des Auflagerings (18), der sich in Bezug auf die drehbare unterstützende Säule (4) radial erstreckt, einen drehbaren Abschnitt umfasst, der sich um die gesamte Peripherie des Auflagerings (18) erstreckt.

3. Vorrichtung nach Ansprüchen 1 und 2, **dadurch gekennzeichnet, dass** die Verzahnungsabschnitte (23, 24) aus einer Hirth-Verzahnung bestehen.

4. Vorrichtung nach den Ansprüchen 1 bis 3, **dadurch gekennzeichnet, dass** die Verzahnungsabschnitte (23, 24) aus kreisförmigen Rändern der Hirth-Verzahnung bestehen.

5. Vorrichtung nach Anspruch 4, **dadurch gekennzeichnet, dass** die Hirth-Verzahnungs-Ränder auf dem kreisförmigen Abschnitt (18a) des Rings (18) der unterstützenden Auflage bzw. auf einer axialen Schulter der radialen Wand (25), die mit dem stationären Körper (2) integral ist, getragen werden, wodurch die radiale Vertiefung (22) für das Anordnen des radialen Abschnittes (18a) des Auflagerings (18) abgesteckt wird.

6. Vorrichtung nach einem der Ansprüche 1 bis 5, **dadurch gekennzeichnet, dass** die Motormittel, welche auf die Auflage wirken, einen hydraulischen Kolben (26) umfassen, der innerhalb einer axialen Verlängerung (27) der radialen Vertiefung (22) angeordnet ist, um den Auflagering innerhalb des stationären Körpers (2) anzuordnen.

7. Vorrichtung nach einem der Ansprüche 1 bis 6, **dadurch gekennzeichnet, dass** das erste Verbindungsmittel (11), das mit dem stationären Körper (2) integral ist, und das zweite Verbindungsmittel (10), das mit der drehbaren Säule (4) integral ist, aus Hirth-Verzahnungs-Rändern bestehen.

8. Vorrichtung nach einem der Ansprüche 1 bis 7, **dadurch gekennzeichnet, dass** das Verbindungselement (9), welches sich zwischen einer ersten Position, in der es in einem gleichzeitigen Eingriff mit den ersten (10) und zweiten (11) Verbindungsmitteln befindet, wodurch diese zueinander integral werden, und einer zweiten Position bewegt, in der es sich in einem Abstand zu den Verbindungsmitteln befindet, einen Hirth-Verzahnungs-Rand umfasst.

## Revendications

1. Plateau tournant (3) pour supporter des pièces à usiner ou des porte-outils pour des outils adaptés pour effectuer des opérations de tournage et/ou pour des outils adaptés pour effectuer des opérations de perçage et/ou de fraisage, comprenant une colonne de support (4) pouvant tourner autour d'un axe prédéterminé, en particulier un axe « B » d'une machine-outil, un corps de base stationnaire (2, 7) adapté pour être fixé sur la machine-outil, disposé coaxialement par rapport à ladite colonne rotative (4), des moyens de motorisation pour faire tourner ladite colonne de support rotative du plateau tournant autour dudit axe prédéterminé (B-B), des premiers moyens de connexion (11) d'une seule pièce avec ledit corps de base stationnaire (7) et des seconds moyens de connexion (13) d'une seule pièce avec ladite colonne rotative (4), un élément de connexion (9) avec une denture (10), mobile entre une première position, dans laquelle il est en prise avec lesdits premiers et lesdits seconds moyens de connexion en même temps, en les rendant d'une seule pièce les uns les autres, et une seconde position dans laquelle il est séparé desdits moyens de connexion, ladite première et ladite seconde position de l'élément de connexion (9) pouvant être actionnées dans des positions de fonctionnement stationnaires correspondantes du plateau (3) espacées angulairement les unes des autres, au moins un palier de centrage radial et de support axial (19, 20, 21) étant disposé entre ladite colonne rotative (4) et ledit corps stationnaire (2), ainsi qu'un élément adapté pour éliminer l'écartement existant entre ladite colonne rotative (4) et ledit corps stationnaire (2),
**caractérisé en ce que**
ledit palier de support comprend une bague (18) portant des rouleaux de support axial (20, 21) et de centrage radial (19) montés sur la colonne rotative (4) supportant le plateau (3), ladite bague (18) étant munie d'au moins une partie (18a) qui s'étend radialement à l'intérieur d'un évidement annulaire (22) obtenu dans le corps de base stationnaire (2), dans lequel l'évidement (27) est mobile axialement, ladite partie (18a) étant munie au moins d'une première partie dentée axiale (23) concentrique par rapport audit axe (B-B) autour duquel ladite colonne rotative (4) peut tourner, les dents de ladite partie dentée (23) étant en saillie parallèlement audit axe (B-B) et étant en prise axiale partielle constante avec les dents d'une seconde denture (24) faisant face et opposée, d'une seule pièce avec une paroi radiale (25) délimitant ledit évidement (22), lorsque le plateau est dans la configuration verrouillée et étant en prise axiale totale lorsque le plateau (3) est dans la configuration de rotation, des moyens de motorisation (26) étant fournis pour mouvoir axialement la bague (18) dudit palier avec ledit évidement (22) du corps stationnaire (2).

2. Dispositif selon la revendication 1, **caractérisé en ce que** ladite partie (18a) de la bague (18) du palier qui s'étend radialement par rapport à la colonne de support rotative (4) comprend une partie annulaire s'étendant sur toute la périphérie de la bague (18) du palier.

3. Dispositif selon les revendications 1 et 2, **caractérisé en ce que** lesdites parties dentées (23, 24) sont formées par des dentures Hirth.

4. Dispositif selon les revendications 1 à 3, **caractérisé en ce que** lesdites parties dentées (23, 24) sont formées par des couronnes annulaires de denture Hirth.

5. Dispositif selon la revendication 4, **caractérisé en ce que** lesdites couronnes de denture Hirth sont portées sur ladite partie annulaire (18a) de la bague (18) dudit palier de support, respectivement sur un épaulement axial de la paroi radiale (25), d'une seule pièce avec ledit corps stationnaire (2) délimitant l'évidement radial (22) pour placer ladite partie radiale (18a) de la bague (18) du palier.

6. Dispositif selon l'une quelconque des revendications 1 à 5, **caractérisé en ce que** lesdits moyens de motorisation agissant sur ledit palier comprennent un piston hydraulique (26) positionné à l'intérieur d'une extension radiale (27) dudit évidement radial (22) pour placer la bague du palier à l'intérieur du corps stationnaire (2).

7. Dispositif selon l'une quelconque des revendications 1 à 6, **caractérisé en ce que** lesdits premiers moyens de connexion (11) d'une seule pièce avec ledit corps stationnaire (2) et lesdits seconds moyens de connexion (10) d'une seule pièce avec ladite colonne rotative (4) sont formés par des couronnes de denture Hirth.

8. Dispositif selon l'une quelconque des revendications 1 à 7, **caractérisé en ce que** ledit élément de connexion (9) pouvant se mouvoir entre une première position, dans laquelle il est en prise concurrente avec lesdits premiers (10) et lesdits seconds (11) moyens de connexion, en les rendant d'une seule pièce les uns les autres, et une seconde position, dans laquelle il est séparé desdits moyens de connexion, comprend une couronne dentée Hirth.
